(19) **Europäisches Patentamt**

**European Patent Office**

**Office européen des brevets**

(11) **EP 0 903 581 B1**

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(51) Int Cl.$^7$: **G01N 31/00**

(21) Anmeldenummer: **98116567.3**

(22) Anmeldetag: **02.09.1998**

(54) **Karl-Fischer-Reagenz**

Karl-Fischer-Reagent

Réactif de Karl-Fischer

(84) Benannte Vertragsstaaten:
**AT BE CH DE DK ES FI FR GB GR IE IT LI NL PT SE**

(30) Priorität: **17.09.1997 DE 19740965**

(43) Veröffentlichungstag der Anmeldung:
**24.03.1999 Patentblatt 1999/12**

(73) Patentinhaber: **Rdh Laborchemikalien GmbH & Co. KG**
**30926 Seelze (DE)**

(72) Erfinder:
• **Schöffski, Katrin, Dr.**
**30163 Hannover (DE)**
• **Hoffmann, Helga**
**31515 Wunstorf (DE)**

(74) Vertreter:
**Geissler, Bernhard, Dr.jur., Dipl.-Phys. et al**
**Patent- und Rechtsanwälte**
**Bardehle . Pagenberg . Dost .**
**Altenburg . Geissler**
**Galileiplatz 1**
**81679 München (DE)**

(56) Entgegenhaltungen:
US-A- 4 851 352     US-A- 5 102 804
US-A- 5 466 606     US-A- 5 567 618

• HOUSTON T.E., POORE M.W.: "The Application of the Karl Fischer Oven for the Determination of Water in Consumer Products" J.AIR WASTE MANAGE.ASSOC., Bd. 46, Nr. 10, 1996, Seiten 990-992, XP002101877 US

## Beschreibung

Die vorliegende Erfindung betrifft ein Reagenz zur Wasserbestimmung nach Karl Fischer (KF), das als Alkoholkomponente bei Raumtemperatur und Atmosphärendruck flüssige, nicht mit einem Gefahrensymbol nach § 3a, Abs. 1 Gesetz zum Schutz vor gefährlichen Stoffen (ChemG) bzw. Gefahrstoffverordnung §§ 4; 6 Abs. 1 zu kennzeichnende Propylenglykolmonoalkylether enthält.

Bei der Karl-Fischer-Titration wird das Wasser durch eine Redoxtitration nach folgender Reaktionsgleichung bestimmt:

$$H_2O + I_2 + (RNH)SO_3\text{-}R' + 2\,RN = > (RNH)SO_4 + 2\,(RNH)\,I$$

RN = Base, R' = Alkyl (ggf. substituiert)

Im Reagenz entsteht aus einem Alkohol und Schwefeldioxid ein Alkylester der schwefligen Säure. Dieser wird unter Verbrauch stöchiometrischer Mengen Wasser durch Iod zu dem korrespondierenden Schwefelsäurealkylester oxidiert. In der Praxis werden als Alkoholkomponenten Methanol oder 2-Methoxyethanol (Methylglykol) verwendet (E. Scholz, "Karl-Fischer-Titration", Springer Verlag, 1984).

Da der verwendete Alkohol nicht nur als Lösungsmittel dient, sondern auch an der Reaktion teilnimmt, beeinflußt er das Titrationsverhalten der damit hergestellten Reagenzien.

Es gibt vier Grundformen der Karl-Fischer-Titration, d. h. die volumetrische Titration mit einem Einkomponentenreagenz, die volumetrische Titration mit einem Zweikomponentenreagenz und die coulometrische Titration mit und ohne Diaphragma. Diese vier Varianten erfordern unterschiedliche Reagenzien.

Für die Einkomponententitration wird ein Reagenz benötigt, das alle Reaktionspartner des Wassers in einer Lösung enthält. Schwefeldioxid, Iod und die Base werden in einem Alkohol gelöst. In dieser Lösung reagieren das Schwefeldioxid und der Alkohol schon bei der Zubereitung zu Alkylsulfit. Die Base nimmt das freiwerdende Proton auf. In dem Originalreagenz von Karl Fischer wurde Methanol als Alkohol verwendet. Stabilere Reagenzien wurden später mit Methylglykol erhalten. In allen Einkomponentenreagenzien fällt der Titer, d.h. die Konzentration des aktiven Iods, mit der Zeit ab. Als Lösungsmittel für die Probe wird im Titriergefäß meist Methanol oder ein Gemisch von Methanol und anderen Lösungsmitteln verwendet.

Bei der Zweikomponententitration werden, wie der Name schon sagt, zwei Reagenzien benötigt. Als Titriermittel wird eine Lösung von Iod in Methanol verwendet, als Solvent dient eine Lösung von Schwefeldioxid und einer Base in Methanol. In diesem Solvent wird ebenfalls wie im Einkomponentenreagenz Alkylsulfit gebildet. In diesem Fall entsteht Methylsulfit, weil immer Methanol als Lösungsmittel verwendet wird. Die Solventkomponente wird im Titriergefäß vorgelegt, mit der Titrantkomponente wird titriert. Ein Titerabfall findet in der Titrantkomponente nicht statt.

Die Reagenzien für die coulometrische Wasserbestimmung nach Karl Fischer unterscheiden sich in ihren Bestandteilen von den volumetrischen Reagenzien. Statt Iod wird ein lösliches Iodid eingesetzt. Aus diesem Iodid wird während der Titration durch anodische Oxidation Iod erzeugt, das analog der beschriebenen Reaktionsgleichung reagiert. Die anderen Bestandteile des Reagenzes sind dieselben wie in den volumetrischen Reagenzien, d.h. Schwefeldioxid, eine Base und ein Alkohol, die sich wieder wie beschrieben zu dem Alkylsulfit umsetzen, das mit dem Iod und dem Wasser reagiert. Bei der Coulometrie wird ebenfalls bevorzugt Methanol, teilweise in Gemischen mit anderen Lösungsmitteln wie Chloroform, verwendet. In einer sogenannten Zelle mit Diaphragma sind der Kathoden- und der Anodenraum durch ein Diaphragma getrennt. Dadurch werden Störungen durch an der Kathode entstehende oxidierbare Substanzen vermieden. Beide Räume müssen separat mit Reagenz befüllt werden. Für den Kathodenraum wird üblicherweise ein spezielles Kathodenreagenz eingesetzt.

Bei der coulometrischen Titration ohne Diaphragma ist eine Trennung von Kathoden- und Anodenraum nicht nötig, da eine spezielle Kathodengeometrie die Bildung von oxidierbaren Substanzen verhindert. Hier ist nur ein Gefäß zu befüllen.

Die verwendeten Alkohole in den Karl-Fischer-Reagenzien haben zusätzlich noch die Aufgabe, die Proben und die entstehenden Reaktionsprodukte in Lösung zu halten. Höherkettige Alkohole haben ein sehr schlechtes Lösevermögen für polare Substanzen und sind deswegen für viele Probematrices nicht geeignet. Die Polarität macht sich auch bei der Herstellung der coulometrischen Reagenzien bemerkbar, ein Mindestleitwert ist hier erforderlich, der mit längerkettigen Verbindungen nicht erzeugt werden kann.

Die bislang verwendeten Alkohole sind in der Laborpraxis nicht unbedenklich. Methanol ist giftig und entflammbar, Methylglykol ist teratogen Methylglykol wird nur für Einkomponentenreagenzien verwendet, als Arbeitsmedium in der Titrierzelle greift man hier auch hauptsächlich auf Methanol zurück, da die üblichen Karl-Fischer-Titratoren in Methylglykol als Arbeitsmedium zu langsam titrieren. Auch andere Lösungsmittel, die eine Titration ermöglichen, sind gesundheitlich bedenklich. Tetrahydrofurfurylalkohol ist als gesundheitsschädlich eingestuft, N-Methylformamid ist fototoxisch.

Ein weiterer Nachteil der oben beschriebenen Alkohole in der Karl-Fischer-Titration ist das Auftreten von Nebenreaktionen bei bestimmten Proben, die sich in einer Verfälschung der Titrationsergebnisse niederschlagen. Methanol reagiert mit Ketonen und Aldehyden zu Ketalen bzw. Acetalen. Bei dieser Reaktion wird Wasser gebildet. Zusätzlich gehen Aldehyde in der Gegenwart von Methanol und Methylglykol eine Bisulfitaddition mit dem Schwefeldioxid ein. Dabei wird Wasser verbraucht, was ebenfalls die Analyse verfälscht. Vermeiden kann man diese Nebenreaktion durch den Einsatz von 2-Chlorethanol als Lösungsmittel im Titriergefäß. Diese Substanz ist jedoch hochgiftig und wie viele halogenierte Verbindungen schwer abbaubar.

Aus dem Stand der Technik nach US 5102804 ist ein Karl-Fischer-Reagenz bekannt, das ein Iodhalogenid oder mehrere davon, ein Salz einer aromatischen, Stickstoff enthaltenden heterocyclischen Verbindung oder Mischungen davon, Schwefeldioxid und eine Base umfasst, wobei als Lösungsmittel für die zu untersuchende Probe und das Titrationsmittel alle für Karl-Fischer-Reagenzien üblichen Alkohole verwendet werden können. Durch die Verwendung von Iodhalogenid anstelle von Iod weist das Karl-Fischer-Reagenz eine verbesserte Stabilität, eine höhere Reaktionsgeschwindigkeit auf und liefert genauere Analysenergebnisse. Ein iodhaltiges Karl-Fischer-Reagenz mit einem geringeren Gefährdungspotential wird in diesem Dokument nicht erwähnt.

Um eine wesentliche Verbesserung der zur Zeit üblichen Karl-Fischer-Reagenzien zu erzielen, gilt es also, einen Alkohol zu finden, der in seinem Lösevermögen für polare Substanzen, in seiner elektrischen Leitfähigkeit und der Reaktionsgeschwindigkeit den oben beschriebenen möglichst ähnlich ist, während Nebenreaktionen weitestgehend unterdrückt werden sollen. Das wichtigste Kriterium ist jedoch das Gefährdungspotential, das von dem Reagenz für die Anwender und die Umwelt ausgeht. Giftige und brennbare Reagenzien sollten aus Routinelaboratorien im Interesse der Sicherheit verbannt werden. Schwer abbaubare Reagenzien belasten die Umwelt auf Jahre hinaus.

Reagenzien auf der Basis von den erfindungsgemäß verwendeten bei Raumtemperatur und Atmospärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylethern vermeiden alle erwähnten Nachteile und ähneln in ihrem Verhalten stark den Reagenzien mit Methylglykol. Diese flüssigen Propylenglykolmonoalkylether sind im Gegensatz zu Methylglykol nicht mit einem Gefahrensymbol nach § 3a, Abs. 1 Gesetz zum Schutz vor gefährlichen Stoffen (ChemG) bzw. Gefahrstoffverordnung §§ 4; 6 Abs. 1 zu kennzeichnen.

Die vorliegende Erfindung betrifft somit ein Karl-Fischer-Reagenz zur Wasserbestimmung, das einen bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder ein Gemisch aus zwei oder mehr davon enthält.

Der erfindungsgemäß verwendete bei Raumtemperatur und Atmosphärendruck flüssige, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnende Propylenglykolmonoalkylether kann in allen vier beschriebenen Varianten verwendet werden. Somit betrifft die vorliegende Erfindung weiterhin ein Karl-Fischer-Reagenz, das dadurch gekennzeichnet ist, daß es als Einkomponenten-Reagenz vorliegt und neben dem erwähnten bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder dem Gemisch aus zwei oder mehr davon, Schwefeldioxid, eine Base und Iod enthält.

Ferner betrifft sie ein Karl-Fischer-Reagenz, das dadurch gekennzeichnet ist, daß es als Zweikomponenten-Reagenz aus einer Solvent-Komponente und Titrant-Komponente vorliegt, wobei vorzugsweise sowohl die Solvent- als auch die Titrant-Komponente neben den weiter unten definierten für diese Komponenten üblichen Bestandteilen jeweils einen bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder ein Gemisch aus zwei oder mehr davon enthält.

Darüber hinaus betrifft die vorliegende Erfindung demnach eine Solvent-Komponente, die dadurch gekennzeichnet ist, daß sie einen bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder ein Gemisch aus zwei oder mehr davon und Schwefeldioxid und eine Base enthält, sowie eine Titrant-Komponente, die dadurch gekennzeichnet ist, daß sie neben dem erfindungsgemäß verwendeten bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder dem Gemisch aus zwei oder mehr davon Iod enthält.

Ferner betrifft die vorliegende Erfindung ein Karl-Fischer-Reagenz zur coulometrischen Wasserbestimmung, das dadurch gekennzeichnet ist, daß es neben einem bei Raumtemperatur und Atmosphärendruck flüssigen, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnenden Propylenglykolmonoalkylether oder einem Gemisch aus zwei oder mehr davon, Schwefeldioxid, eine Base und Iodid enthält.

Der im Rahmen der vorliegenden Erfindung verwendete Begriff "bei Raumtemperatur und Atmosphärendruck flüssiger, nicht mit einem Gefahrensymbol nach § 3a, Abs. 1 Gesetz zum Schutz vor gefährlichen Stoffen (ChemG) bzw. Gefahrstoffverordnung §§ 4; 6, Abs. 1 zu kennzeichnende Propylenglykolmonoalkylether" (im folgenden öfters auch als "Propylenglykolmonoalkylether" bezeichnet), umfaßt alle Propylenglykolmonoalkylether, die bei Raumtemperatur und Atmosphärendruck flüssig sind, und nicht mit einem Gefahrensymbol nach § 3a, Abs. 1 Gesetz zum Schutz vor gefährlichen Stoffen bzw. Gefahrstoffverordnung §§ 4; 6, Abs. 1 zu kennzeichnen sind, d.h. sowohl Monopropylenglykolmonoalkylether als auch Polypropylenglykolmonoalkylether, die diese Eigenschaften erfüllen.

Im einzelnen sind dabei zu nennen:

1-Alkoxy-2-hydroxypropanole, wie z. B. 1-Methoxy-2-propanol, 1-Propoxy-2-Propanol, 1-n-Butoxy-2-propanol oder 1-tert.-Butoxy-2-propanol, Dipropylenglykolmonoalkylether, wie z. B. Dipropylenglykol-1-monomethylether, Dipropylenglykol-2-monomethylether, Dipropylenglykol-1-monopropyl- und -mono-n-butylether, oder Dipropylenglykol-2-monopropyl- und -mono-nbutylether, Tripropylenglykolmonoalkylether, wie z. B. Tripropylenglykol-1-monomethylether oder Tripropylenglykol-2-monomethylether, und ein Gemisch aus zwei oder mehr davon.

Selbstverständlich können auch Gemische aus zwei oder mehr dieser Propylenglykolmonoalkylether erfindungsgemäß verwendet werden. Vorzugsweise werden im Rahmen der vorliegenden Erfindung die hierin definierten Propylenglykolmonoalkylether als alleiniges Lösungsmittel bzw. Alkohol-Komponente verwendet. Selbstverständlich können jedoch die erfindungsgemäß verwendeten Propylenglykolmonoalkylether auch im Gemisch mit anderen, für die Karl-Fischer-Titration geeigneten Lösungsmitteln, wie sie aus dem Stand der Technik bekannt sind, wie z.B. Methanol, Tetrahydrofurfurylalkohol, N-Methylformamid oder 2-Chlorethanol verwendet werden.

Außer dem Propylenglykolmonoalkylether oder dem Gemisch aus zwei oder mehr davon sind noch die üblichen Bestandteile eines KF-Reagenzes, insbesondere Iod bzw. Iodid, eine Base wie Pyridin, Imidazol, Diethanolamin oder Carbonsäuresalze und das Schwefeldioxid enthalten.

Die oben genannten Bestandteile sind in den für Karl-Fischer-Reagenzien üblichen Mengen enthalten.

Für ein Einkomponentenreagenz liegen die üblichen Mengen z.B. bei 0,2 bis 3 mol/l Schwefeldioxid, 0,2 bis 6 mol/l Base und 0,05 bis 1 mol/l Iod.

Für ein Zweikomponentenreagenz werden in der Titrantkomponente z.B. 0,03 bis 1 mol/l Iod verwendet, in der Solventkomponente werden z.B. 0,2 bis 3 mol/l Base und 0,2 bis 3 mol/l Schwefeldioxid eingesetzt.

Für die coulometrische Wasserbestimmung nach Karl Fischer mit und ohne Diaphragma wird ein Reagenz mit beispielsweise 0,2 bis 3 mol/l Schwefeldioxid, 0,2 bis 5 mol/l Base und 0,01 bis 0,5 mol/l Iodid eingesetzt.

Zusätzlich zu diesen Bestandteilen kann das erfindungsgemäße Karl-Fischer-Reagenz weitere übliche Hilfsstoffe enthalten. Diese Hilfsstoffe werden z.B. verwendet, um die Löslichkeit für spezielle Proben zu verbessern oder um eine befriedigende Leitfähigkeit in coulometrischen Reagenzien zu erhalten.

Der Propylenglykolmonoalkylether oder das Gemisch aus zwei oder mehr davon kann auch als Arbeitsmedium für die volumetrische Karl-Fischer-Titration im Titriergefäß eingesetzt werden. Auf diese Art wird Methanol vollständig ausgeschlossen. Alle vom Methanol ausgehenden Nebenreaktionen finden in diesen Reagenzien nicht statt. Andere Nebenreaktionen sind nicht beobachtet worden. Die Bisulfitaddition wird in flüssigem Propylenglykolmonoalkylether ebenfalls unterdrückt. Die Ketal- und Acetalbildung ist soweit verzögert, daß auch in den sehr reaktiven aromatischen Aldehyden Wasserbestimmungen durchgeführt werden können. Da kein methanolisches Arbeitsmedium mehr erforderlich ist, können sowohl Einkomponentenreagenzien als auch Zweikomponentenreagenzien verwendet werden, da dadurch die Verwendung von als gesundheitsschädlich eingestuften Lösungsmitteln vollständig vermieden werden kann.

Für die coulometrische Karl-Fischer-Titration können ebenfalls Reagenzien verwendet werden, die als Alkoholkomponente Propylenglykolmonoalkylether enthalten. Außer den üblichen Inhaltsstoffen Base, Schwefeldioxid und Iodid können ebenfalls Hilfsstoffe enthalten sein. Übliche Hilfsstoffe sind Salze, die die Leitfähigkeit erhöhen, z.B. Bromide oder quaternäre Ammoniumsalze oder Lösevermittler, die das Lösevermögen für bestimmte Proben erhöhen wie z.B. Formamid oder Chloroform.

Das erfindungsgemäße Reagenz wird bei der Coulometrie ohne Diaphragma in den kombinierten Kathoden- und Anodenraum gefüllt, bei der Coulometrie mit Diaphragma kann für den Kathodenraum ein anderer handelsüblicher Katholyt, wie z. B. Hydranal®-Coulomat CG verwendet werden.

Ferner betrifft die vorliegende Erfindung auch ein Verfahren zur Wasserbestimmung nach Karl-Fischer, wobei eine wasserhaltige Verbindung oder Zusammensetzung mit einem Reagenz oder einer Komponente, wie jeweils oben definiert, in Kontakt gebracht wird.

Im folgenden soll die vorliegende Erfindung anhand einiger Beispiele und Anwendungsbeispiele erläutert werden.

BEISPIELE

### Beispiel 1

Ein Einkomponentenreagenz wurde hergestellt, indem 170 g Imidazol (2,5 Mol) in 700 ml 1-Methoxy-2-propanol gelöst wurden. Dann wurden 100 g Schwefeldioxid (1,56 Mol) und 100 g Iod (0,79 Mol) zugesetzt. Der Ansatz wurde mit 1-Methoxy-2-propanol auf 1 Liter aufgefüllt.

### Beispiel 2

Ein Einkomponentenreagenz wurde analog Beispiel 1 hergestellt, wobei statt des Imidazols 316 g Pyridin (4 Mol) eingesetzt wurden.

### Beispiel 3

Eine Solventkomponente für ein Zweikomponentenreagenz wurde hergestellt; indem 100 g Imidazol (1,47 Mol) und 50 g Schwefeldioxid (0,78 Mol) in 1-Methoxy-2-propanol zu einem Gesamtvolumen von 1 Liter gelöst wurden.

### Beispiel 4

Eine Solventkomponente für ein Zweikomponentenreagenz wurde hergestellt, indem 105 g Diethanolamin (1 Mol) und 64 g Schwefeldioxid (1 Mol) in 1-Methoxy-2-propanol zu einem Gesamtvolumen von 1 Liter gelöst wurden.

### Beispiel 5

Eine Titrantkomponente für ein Zweikomponentenreagenz wurde hergestellt, indem 70 g Iod (0,35 Mol) in 1-Methoxy-2-propanol zu einem Gesamtvolumen von 1 Liter gelöst wurden.

### Beispiel 6

1 Liter Anolyt für die coulometrische Bestimmung wurde hergestellt durch Lösen von 68 g Imidazol (1 Mol), 40 g Schwefeldioxid (0,62 Mol) und 60 g Imidazolhydrobromid (0,4 Mol) in der entsprechenden Menge von 1-Methoxy-2-propanol. Dann wurden 0,39 g Iod (0,15 Mol) zugesetzt und durch den Zusatz von wenig Wasser zu Iodid reduziert.

### Beispiel 7

In einem Gemisch aus 400 ml 1-Methoxy-2-propanol und 400 ml Ethanol wurden 50g Imidazol (0,73 Mol), 40 g Schwefeldioxid (0,62 Mol), 90 g Imidazolhydrobromid (0,6 Mol) und 60 g Imidazolhydroiodid (0,3 Mol) gelöst. Dann wurde mit 1-Methoxy-2-propanol auf 1 Liter aufgefüllt und das in den Rohstoffen enthaltene Wasser durch Iodzusatz entfernt.

### Anwendungsbeispiel 1

In der volumetrischen Titrierzelle eines handelsüblichen KF-Titrators wurde Methanol vorgelegt. Die zu untersuchende Probe wurde darin gelöst und der Wassergehalt mit einem Titriermittel nach Beispiel 1 oder Beispiel 2 titriert.

### Anwendungsbeispiel 2

In einer volumetrischen Titrierzelle wurde 1-Methoxy-2-propanol vorgelegt und mit einem Titriermittel nach Beispiel 1 oder Beispiel 2 trockentitriert. Dann wurde die Probe zugesetzt und in 1-Methoxy-2-propanol gelöst. Danach wurde der Wassergehalt mit dem gleichen Titriermittel titriert.

### Anwendungsbeispiel 3

In der volumetrischen Titrierzelle wurde 1-Methoxy-2-propanol vorgelegt. Dann wurde die zu untersuchende Probe zugesetzt. Der Wassergehalt wurde mit einem üblichen Einkomponentenreagenz nach DAB 10 titriert.

Anwendungsbeispiel 4

In der volumetrischen Titrierzelle wurde die Solventkomponente nach Beispiel 3 vorgelegt. Die wasserhaltige Probe wird zugesetzt und mit der Titrantkomponente nach Beispiel 5 titriert.

Anwendungsbeispiel 5

In der volumetrischen Titrierzelle wurde die Solventkomponente nach Beispiel 4 vorgelegt. Die wasserhaltige Probe wurde zugesetzt und mit einer handelsüblichen Titrantkomponente, einer Lösung von 65 g Iod in 1 L Methanol, titriert.

Anwendungsbeispiel 6

In der volumetrischen Titrierzelle wurde eine handelsübliche Solventkomponente, z.B. eine Lösung von 120 g Pyridin und 60 g Schwefeldioxid in Methanol, vorgelegt. Die zu untersuchende Probe wurde zugesetzt und der Wassergehalt mit einer Titrantkomponente nach Beispiel 5 titriert.

Anwendungsbeispiel 7

Der Anoden- und der Kathodenraum eines handelsüblichen KF-Coulometers, z.B. MKC-210 des Herstellers Kyoto Electronics, wurden mit Reagenz nach Beispiel 6 befüllt. Mit diesem Reagenz wurde der Wassergehalt einer Probe in der für das Gerät vorgeschriebenen Weise bestimmt.

Anwendungsbeispiel 8

Bei einem handelsüblichen Karl-Fischer-Coulometer mit einer Zelle ohne Diaphragma wurde das Reagenz nach Beispiel 7 eingefüllt und der Wassergehalt einer Probe in der üblichen Weise bestimmt.

**Patentansprüche**

1. Karl-Fischer-Reagenz zur Wasserbestimmung, enthaltend einen Alkohol, Schwefeldioxid, eine Base und Iod, **dadurch gekennzeichnet, dass** der Alkohol 1-Methoxy-2-propanol ist.

2. Karl-Fischer-Reagenz nach Anspruch 1, **dadurch gekennzeichnet, dass** es als Einkomponenten-Reagenz vorliegt.

3. Karl-Fischer-Reagenz nach Anspruch 1, **dadurch gekennzeichnet, dass** es als Zweikomponenten-Reagenz aus Solvent-Komponente und Titrant-Komponente vorliegt.

4. Karl-Fischer-Reagenz nach Anspruch 3, **dadurch gekennzeichnet, dass** die Solvent-Komponente 1-Methoxy-2-propanol sowie Schwefeldioxid und eine Base enthält.

5. Karl-Fischer-Reagenz nach Anspruch 3 oder 4, **dadurch gekennzeichnet, dass** die Titrant-Komponente 1-Methoxy-2-propanol sowie Iod enthält.

6. Karl-Fischer-Reagenz nach Anspruch 1 zur coulometrischen Wasserbestimmung, **dadurch gekennzeichnet, dass** es statt Iod ein Iodid enthält.

7. Verfahren zur Wasserbestimmung nach Karl Fischer, **dadurch gekennzeichnet, dass** eine wasserhaltige Verbindung oder Zusammensetzung mit einem Reagenz oder einer Komponente nach einem der Ansprüche 1 bis 6 in Kontakt gebracht wird.

8. Verwendung von 1-Methoxy-2-propanol als Arbeitsmedium im Titriergefäß bei der volumetrischen Karl-Fischer-Titration.

**Claims**

1. Karl Fischer reagent for the determination of water, comprising an alcohol, sulphur dioxide, a base and iodine, **characterized in that** the alcohol is 1-methoxy-2-propanol.

2. Karl Fischer reagent according to Claim 1, **characterized in that** it is in the form of a one-component reagent.

3. Karl Fischer reagent according to Claim 1, **characterized in that** it is in the form of a two-component reagent comprising a solvent component and a titrant component.

4. Karl Fischer reagent according to Claim 3, **characterized in that** the solvent component comprises 1-methoxy-2-propanol as well as sulphur dioxide and a base.

5. Karl Fischer reagent according to Claim 3 or 4, **characterized in that** the titrant component comprises 1-methoxy-2-propanol and iodine.

6. Karl Fischer reagent according to Claim 1 for the coulometric determination of water, **characterized in that** it contains an iodide instead of iodine.

7. Process for the determination of water by the Karl Fischer method, **characterized in that** a water-containing compound or composition is brought into contact with a reagent or a component according to any of Claims 1 to 6.

8. Use of 1-methoxy-2-propanol as working medium in the titration vessel in the volumetric Karl Fischer titration.

**Revendications**

1. Réactif de Karl Fischer pour le dosage de l'eau, contenant un alcool, du dioxyde de soufre, une base et de l'iode, **caractérisé en ce que** l'alcool est du 1-méthoxy-2-propanol.

2. Réactif de Karl Fischer selon la revendication 1, **caractérisé en ce qu'**il se présente sous forme d'un réactif monocomposant.

3. Réactif de Karl Fischer selon la revendication 1, **caractérisé en ce qu'**il se présente sous forme d'un réactif bicomposant avec un composant solvant et un composant de titrage.

4. Réactif de Karl Fischer selon la revendication 3, **caractérisé en ce que** le composant solvant comprend du 1-méthoxy-2-propanol ainsi que du dioxyde de soufre et une base.

5. Réactif de Karl Fischer selon la revendication 3 ou 4, **caractérisé en ce que** le composant de titrage comprend du 1-méthoxy-2-propanol ainsi que de l'iode.

6. Réactif de Karl Fischer selon la revendication 1 pour le dosage colorimétrique de l'eau, **caractérisé en ce qu'**il comprend un iodure à la place de l'iode.

7. Procédé de dosage de l'eau selon Karl Fischer, **caractérisé en ce que** l'on met un composé ou une composition contenant de l'eau en contact avec un réactif ou un composant selon l'une des revendications 1 à 6.

8. Utilisation du 1-méthoxy-2-propanol comme milieu de travail dans le récipient de titrage en titrage volumétrique de Karl Fischer.